# NEW EUROPEAN PATENT SPECIFICATION

(11) **EP 2 971 664 B2**
(45) Date of publication and mention of the opposition decision: **10.01.2024**
(45) Mention of the grant of the patent: 17.03.2021
(21) Application number: 13878400.4
(22) Date of filing: 18.12.2013
(51) Int. Cl.: F02C 7/12, F01D 25/12, F02K 3/06, F02K 3/115, F02C 6/08, F02C 9/18, F02C 7/18, F02C 3/107, F01D 25/24, F02C 3/04, F02C 7/04, F02C 7/14

(54) **GEARED TURBOFAN ENGINE AND COOLING METHOD THEREOF**
GETRIEBETURBOFANMOTOR UND KÜHLVERFAHREN DAFÜR
MOTEUR À TURBOSOUFFLANTE À ENGRENAGE ET SON PROCÉDÉ DE REFROIDISSEMENT

(30) Priority: 15.03.2013 US 201361800411 P
(43) Date of publication of application: 20.01.2016
(73) Proprietor: RTX Corporation, Farmington, CT 06032 (US)
(72) Inventor: SCHWARZ, Frederick, M., Glastonbury, CT 06033 (US); PICKFORD, Simon, Amston, CT 06231 (US)
(74) Representative: Dehns
(86) International application number: PCT/US2013/075961
(87) International publication number: WO 2014/143282

(56) References cited:
- US-A- 5 269 135
- US-A- 5 553 449
- US-A- 5 553 449
- US-A1- 2007 245 739
- US-A1- 2008 112 798
- US-A1- 2009 301 057
- US-A1- 2010 180 571
- US-A1- 2010 180 571
- US-A1- 2012 171 018
- US-A1- 2012 216 545
- US-A1- 2012 216 545

## Description

### TECHNICAL FIELD

This disclosure relates to gas turbine engines such as geared turbofan gas turbine engines. More specifically, this disclosure relates to geared turbofan gas turbine engines that draw air from the fan duct or bypass flow path for cooling oil or lubricant with minimal pressure loss in the fan bypass flow path.

### BACKGROUND

In a modern jet airliner, there are two ways to increase fuel economy. One way is to increase combustion temperatures so fuel is burned more efficiently. However, engines already operate at levels above 2,500°F (1371°C), the melting point of many turbine blades that propel the plane. As a result, engineers are forced to design cooling systems and use special turbine blade coatings and unwieldy materials like ceramics.

The other possibility is to increase the bypass flow, or the amount of air the fan at the front of the engine blows through the annulus or bypass flow path between the engine case and the outer nacelle, *i.e.,* the amount of air that bypasses the engine. One problem with this approach is that fan assemblies of jet engines operate most efficiently at low rpms, while turbines of jet engines operate most efficiently at high rpms. Reconciling these two competing characteristics while attempting to increase the fuel efficiency of the engine is problematic.

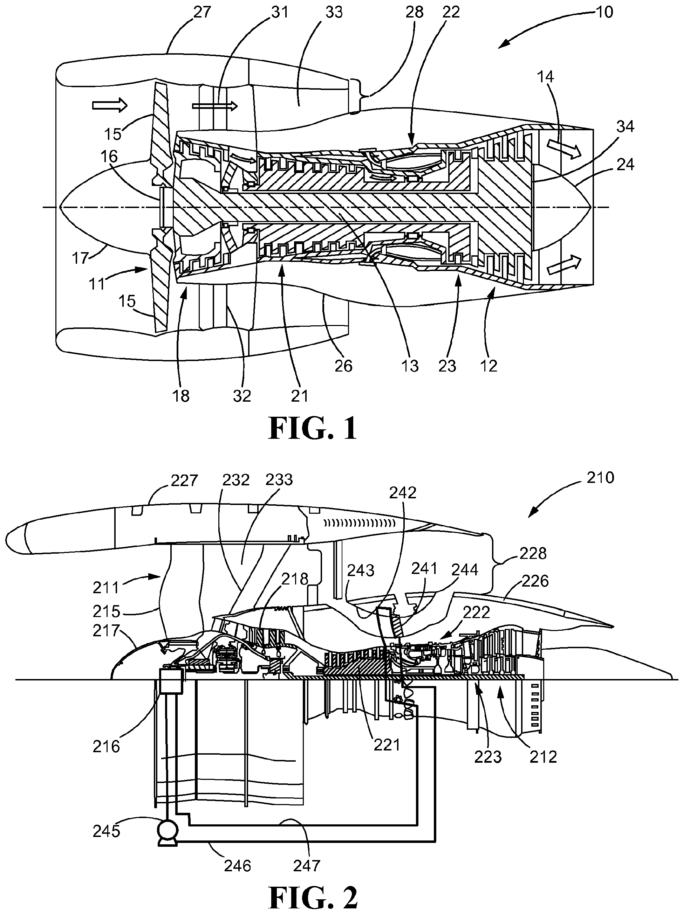

To alleviate this problem, a geared turbofan jet engine 10 is shown in FIG. 1. The engine 10 has a large diameter fan assembly 11 that is rotated by a low pressure turbine (LPT) 12 via a shaft 13. The engine 10 is referred to as high bypass ratio geared turbofan engine and, due to the low fuel burn, are now becoming commonplace in the commercial airline industry. Expanding engine core gases 14 rotate the LPT 12 to provide the necessary energy to rotate the shaft 13, which rotates the fan assembly 11. Since the fan assembly 11 is directly coupled to the LPT 12, the fan assembly 11 rotates at a relatively high speed. The high speed of the fan assembly 11 produces very high tensile loads on the other rotational components, including the fan blades 15, so these components are made considerably larger and heavier to prevent failure. Further, when the fan assembly 11 rotates with the LPT 12, the rotational speed of the fan 11 is too fast for optimum aerodynamic efficiency.

To alleviate these problems, the engine 10 is able to rotate the fan assembly 11 at a slower speed than the LPT 12 through a reduction gearbox 16. The LPT 12 drives the fan assembly 11 without excessively loading the rotational components, that include, but are not limited to the fan blades 15. By turning the fan assembly 11 at a slower speed than the LPT 12, the fan assembly 11 may operates at its optimum aerodynamic efficiency regardless of the rotational speed of the LPT 12.

To complete the description of the sectional view of the engine 10 of FIG. 1, the fan assembly 11 is mounted immediately aft of a nose cone 17 and immediately fore of a low pressure compressor (LPC) 18. The gear box 16 may be disposed between the fan blade assembly 11 and the LPC 18. The LPC 18 may be disposed between the fan blade assembly 11 and a high pressure compressor (HPC) 21. The LPC 18 and HPC 21 may be disposed fore of a combustor 22 which may be disposed between the HPC 21 and a high pressure turbine (HPT) 23. The HPT 23 is typically disposed between the combustor 22 and the LPT 12. The LPT 12 may be disposed immediately fore of a nozzle 24. The LPC 18 may be coupled to the LPT 12 via the shaft 13 which may extend through an annular shaft 25 that may couple the HPC 21 to the HPT 23. An engine case 26 may be disposed within an outer nacelle 27. The aft end of the nacelle 27 may be referred to as the fan nozzle 28. An annular bypass flow path 33 may be created by the engine case 26 and the nacelle 27 that permits bypass airflow 31 or airflow that does not pass through the engine case 26 but, instead, flows from the fan assembly 11, past the fan exit guide vane 32 and through the bypass flow path 33. One or more frame structures 34 may be used to support the nozzle 24.

This disclosure also relates to lubrication systems for gas turbine engines and more particularly, to air and lubricant heat exchangers for use in maintaining desired temperatures of the lubricants in such engines and equipment. Lubrication systems for turbine engines, such as a turbofan engine provide pressurized lubricant, an oil, to lubricate, cool and clean the engine main bearings, gear box gears, and the like, and again for the lubrication of bearings and other parts in equipment associated with such turbine engines. During such lubrications, heating of the lubricant occurs due to mechanical energy losses. Thermal management of such lubricants is very important for continued successful operation of such lubrication systems.

The amount of heat necessary to be ejected from lubricants in such systems is increasing because of the use of large electrical generators in gas turbine engines due to increasing electrical power demands of modern aircraft, and because of the advances in aircraft turbine engines such as the use of geared turbofan engines 10 (FIG. 1) with the large fan-drive gearboxes 17.

The lubrication system for a geared turbofan engine 10 typically has a first heat exchanger having passageways through which lubricating oil passes to be cooled by the fuel stream flowing past and around these passageways. This arrangement permits the lubricating oil to reject heat therein to the fuel in the aircraft thereby heating that fuel to help recover some of the energy lost in the combustor 22 of the engine 10. Because in some flight situations more heat is generated in the lubricating oil than can be accepted for warming the fuel, a portion of the lubricating oil can be forced to bypass the heat exchanger for the fuel and the lubricating oil, and the oil can be directed to a second heat exchanger where the heat therein is transferred to the air in the secondary airstream provided by the fan of the turbofan engine. In a typical arrangement, a duct is provided in the fan cowling through which a portion of the airstream is diverted, and the air and lubricating oil heat exchanger is placed in this duct so that lubricating oil passing through the heat exchanger is cooled by the duct airstream. If such additional cooling of the oil is not needed in a flight situation, the lubricating oil can again be forced to bypass this air and lubricating oil heat exchanger.

The fan airstream that is diverted to pass through the lubricating oil and air heat exchanger must provide adequate oil cooling for the most extreme flight conditions encountered. Larger heat exchangers require larger cross sectional area ducts, and therefore such air and lubricating oil heat exchangers continually leads to thrust losses in the turbofan engine. Hence, there is a strong desire for an air and lubricating oil heat exchanger duct based system that reduces such thrust losses.

US 2009/301057A1, US 2010/180571A1, US 5553449A and US 5269135A disclose gas turbine engines having heat exchangers. In US 2009/301057A1 a heat exchanger is positioned in a recess in an external wall of an engine. The remaining references disclose heat exchangers located in a duct in an engine case.

### SUMMARY

Viewed from one aspect the present invention provides a gas turbine engine according to claim 1. Viewed from another aspect the present invention provides a method for cooling lubricant or oil according to claim 4.

The gas turbine engine may be a geared turbofan engine having a bypass ratio of at least six (6).

The inlet may be disposed between the engine case and the nacelle.

The fan pressure ratio may range from about 1.2 to about 1.5.

The gearbox may have an efficiency ranging from about 97.7 to about 99.7%.

### BRIEF DESCRIPTION OF THE DRAWINGS

FIG. 1 is a sectional view of a geared turbofan engine.
FIG. 2 is a partial sectional view of a geared turbofan engine but also including a cooling air duct that receives bypass airflow that flows across an air-oil heat exchanger disposed in the duct.
FIG. 3 is another partial sectional view of a geared turbofan engine as shown in FIGS. 1-2 but with a different cooling air duct configuration.
FIG. 4 is another partial sectional view of a geared turbofan engine as shown in FIGS. 1-3 but with a different cooling air duct configuration.
FIG. 5 is another partial sectional view of a geared turbofan engine as shown in FIGS. 1-4 but with a cooling air duct configuration in accordance with an embodiment of the invention.

### DESCRIPTION

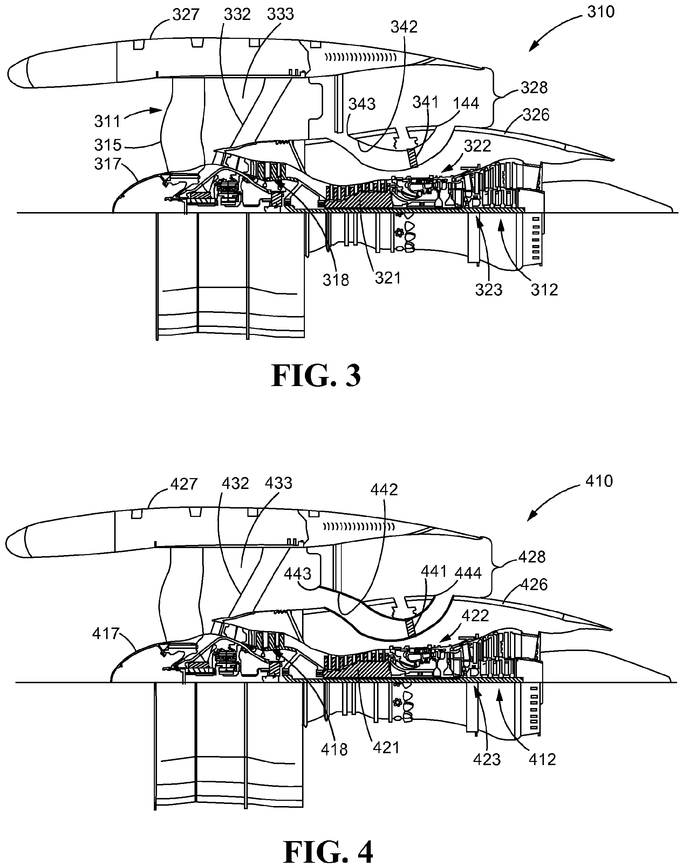

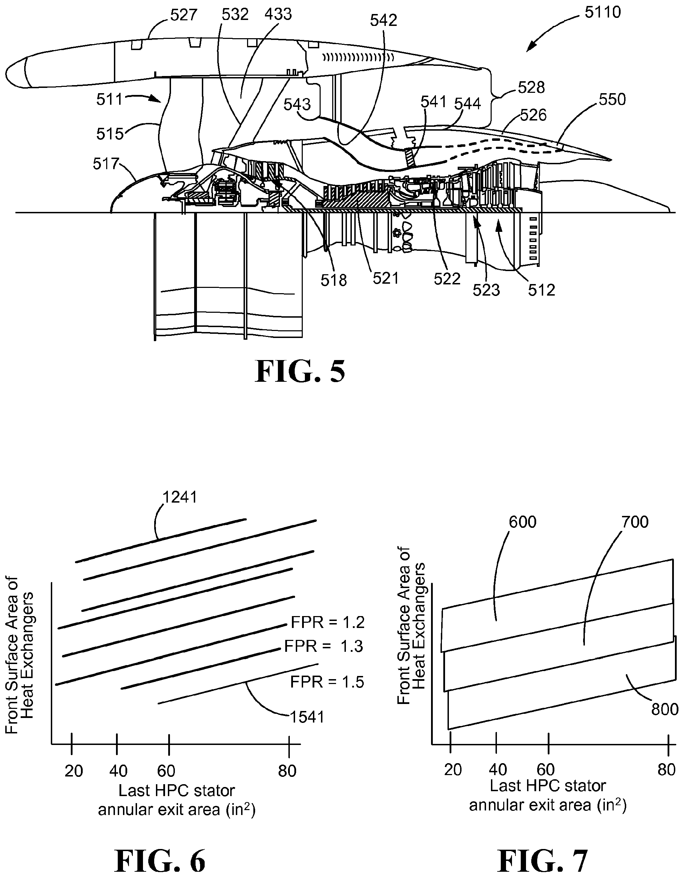

Reference numerals used in FIGS. 2-5 that correspond to like or similar parts shown in FIG. 1 will include a prefix 2 (FIG. 2), 3 (FIG. 3), 4 (FIG. 4) and 5 (FIG. 5).

FIG. 2 illustrates the engine 210 that is equipped with a gearbox 216 that is connected to a heat exchanger 241. The exchanger 241 is disposed within a duct 242. The duct 242 includes an inlet 243 that is flush with the engine case 226. The duct 242 also includes an outlet 244 that is also flush with the engine case 226. The communication between the gearbox 216 and the heat exchanger 241 is shown schematically and may include a pump 245 and two conduits 246, 247, which may be input and return conduits or vice versa. The frontal area of the heat exchanger 241 shown in FIG. 2 will require a larger surface area due to the relatively poor capture of bypass airflow due to the flush inlet 243 and the low overall pressure drop due to the placement of the inlet 243 and the placement of the outlet 244 fore of the fan nozzle 228. Therefore, the engine shown in FIG. 2 requires a heat exchanger 241 with a larger surface area and further creates a low pressure drop through the bypass flow path 233 as well as through the duct 242. The schematic connection between the gearbox 216 and the heat exchangers 341, 441, 541 are not shown in FIGS. 3-5. Further, one skilled in the art will realize that the heat exchanger 241 of FIG. 2 may be part of a larger oil/lubricant circulation/cooling system that involves more than just the gearbox 216.

Turning to FIG. 3, an engine 310 is shown with a duct 342 that features a scooped or raised inlet 343. Like the outlet 244 of FIG. 2, the outlet 344 of FIG. 3 is also flush with the engine case 326. The flush outlet 344 is still fore of the fan nozzle 328. With the flush outlet 344 fore of the fan nozzle 328 in combination with the scoop or raised inlet 143 that captures more bypass airflow, a smaller heat exchanger 341 may be employed in comparison to the heat exchanger 241 of FIG. 2. The scooped or raised inlet 343 may dramatically improve the overall pressure drop through the duct 342 as well as through the bypass flow path 333.

Turning to FIG. 4, an engine 410 is shown with a cooling air duct 442 that includes a raised or scooped inlet 443 and a flush outlet 444. However, at least part of the flushed outlet 444 is disposed aft of the fan nozzle for 28. As a result of the excellent capture of bypass air is achieved by the inlet 443 and disposing the outlet 444 aft of the fan nozzle 428, the exit pressure is reduced thereby increasing the overall system pressure drop. Thus, the pressure drop through the duct 442 and across the heat exchanger 441 enables even a smaller heat exchanger 441 to be utilized as opposed to the heat exchangers 341 of FIG. 3 and 241 of FIG. 2.

Turning to FIG. 5, an engine 510 is shown with a cooling air duct 542 that includes a raised or scooped inlet 543 and an outlet 544 that is disposed within the engine case 526 the outlet 544 may be in communication with the atmosphere or a core cowl vent shown schematically at 550. As a result of the excellent capture of bypass air is achieved by the inlet 543 and disposing the outlet 544 inside the engine case 526, the exit pressure is reduced further thereby further increasing the overall system pressure drop. Thus, the pressure drop through the duct 542 and across the heat exchanger 541 enables even a smaller heat exchanger 541 to be utilized as opposed to the heat exchangers 441 of FIG. 4, 341 of FIG. 3 and 241 of FIG. 2.

Turning to FIG. 6, the surface area of the front of the heat exchanger core is plotted along the y-axis while the thrust engine size or the last stator of high pressure compressor 21, 221, 321, 421, 521 is plotted along the x-axis. The heat exchanger 241 is represented by the line 1241 and is near the largest practical heat exchanger size because it is disposed within the duct 242 with the flush inlet 243 and a poor pressure drop across the heat exchanger 241. Thus, the engine of FIG. 2 also provides the lowest fan duct pressure loss. The size of the heat exchanger 241 is maximized also because the air temperature rise across the air side of the heat exchanger 241 is only about 50% of the temperature rise available and because the fan pressure ratio FPR is low. At the lower region FIG. 6, the line 1541 represents the heat exchanger 541 of FIG. 5, which is the smallest heat exchanger since it has excellent input pressure due to the scooped or raised inlet 543 and a low exhaust pressure through the outlet 544. The geared fan pressure ratio is also about 1.5, which is substantially higher than that for the heat exchanger 241 and duct 242 of FIG. 2. Thus, for a given gearbox efficiency, the maximum ducted heat exchanger size is represented by the heat exchanger 241 (line 1241) and the minimum ducted heat exchanger size is represented by the heat exchanger 541 (line 1541).

Turning to FIG. 7, the area between the heat exchanger 241 (line 1241) and the heat exchanger 541 (line 1541) is further affected by gearbox efficiency. Therefore, the design space area between the heat exchangers 241 and 541 for a gearbox having a 97.7% efficiency is represented by the box or area 600. The design space between the heat exchangers 241 and 541 for a gearbox having a 98.7% efficiency is represented by the box or area 700. Finally, the design space between the heat exchangers 241 and 541 for a gearbox having a 99.7% efficiency is represented by the box or area 800.

### INDUSTRIAL APPLICABILITY

Because of the addition of a gearbox for reducing the speed of the fan assembly, geared turbofan engines use more oil or lubricant and therefore require additional cooling capacity for such additional oil or lubricant. Disclosed herein are heat exchanger arrangements that can be combined with an existing oil cooling system or which may be dedicated to the gearbox. The various arrangements require different size heat exchangers due to the different configurations of the inlets, outlets and placements of the outlets. The heat exchangers are disposed within ducts disposed within the engine case.

## Claims

1. A gas turbine engine (510) comprising:
a nacelle (527) that encloses a fan assembly (511) and at least part of an engine case (526), the nacelle and engine case defining an annular bypass flow path (533) for air flow that passes through the fan but that bypasses an engine core disposed within the engine case;
the nacelle including a fore end and an aft end that defines a fan nozzle (528) with the engine case;
the engine case including an inlet (543) connected to a duct (542) that extends to an outlet (544), the duct accommodating a heat exchanger (541) between the inlet and outlet of the duct; and
the heat exchanger transfers heat from oil or lubricant to air passing through the duct (542);
wherein the outlet (544) is in communication with a cowl vent (550) disposed aft of the fan nozzle (528); and
wherein the inlet forms a scoop between the engine case and the nacelle and the outlet is disposed within the engine case.

2. The gas turbine engine (510) of claim 1 wherein the inlet (543) is disposed between the engine case (526) and the nacelle (527).

3. The gas turbine engine (510) as in any of the preceding claims, wherein the gas turbine engine is a geared turbofan engine having a bypass ratio of at least 6.

4. A method for cooling lubricant or oil used to lubricate a gearbox (516) of a geared turbofan gas turbine engine (510), the method comprising:
providing an inlet (543) in an engine case (526), and outlet (544) in the engine case and connecting the inlet and the outlet with a duct (542) disposed in the engine case;
installing an air-oil heat exchanger (541) in the duct; and
connecting the air-oil heat exchanger to an oil or lubricant circuit that passes through the gearbox;
wherein the outlet (544) is in communication with a cowl vent (550) disposed aft of the fan nozzle (528); and
wherein the inlet forms a scoop between the engine case and the nacelle and the outlet is disposed within the engine case.

## Patentansprüche

1. Gasturbinentriebwerk (510), das Folgendes umfasst:
eine Gondel (527), die eine Lüfterbaugruppe (511) und mindestens einen Teil eines Triebwerksgehäuses (526) umschließt, wobei die Gondel und das Triebwerksgehäuse einen ringförmigen Umgehungsströmungsweg (533) für eine Luftströmung definieren, die durch den Lüfter fließt, der jedoch einen Triebwerkskern umgeht, der innerhalb des Triebwerksgehäuses angeordnet ist;
die Gondel ein vorderes Ende und ein hinteres Ende beinhaltet, das eine Lüfterdüse (528) mit dem Triebwerksgehäuse definiert;
wobei das Triebwerksgehäuse einen Einlass (543) beinhaltet, der mit einem Kanal (542) verbunden ist, der sich zu einem Auslass (544) erstreckt, wobei der Kanal einen Wärmetauscher (541) zwischen dem Einlass und dem Auslass des Kanals aufnimmt; und
der Wärmetauscher Wärme aus Öl oder Schmiermittel in Luft überträgt, die durch den Kanal (542) fließt;
wobei der Auslass (544) in Kommunikation mit einer Haubenentlüftung (550) steht, die hinter der Lüfterdüse (528) angeordnet ist; und
wobei der Einlass eine Kelle zwischen dem Triebwerksgehäuse und der Gondel bildet und der Auslass innerhalb des Triebwerksgehäuses angeordnet ist.

2. Gasturbinentriebwerk (510) nach Anspruch 1, wobei der Einlass (543) zwischen dem Triebwerksgehäuse (526) und der Gondel (527) angeordnet ist.

3. Gasturbinentriebwerk (510) nach einem der vorhergehenden Ansprüche, wobei es sich bei dem Gasturbinentriebwerk um ein Getriebeturbofan-Triebwerk handelt, das ein Nebenstromverhältnis von mindestens 6 aufweist.

4. Verfahren zum Kühlen von Schmiermittel oder Öl, das verwendet wird, um einen Getriebekasten (516) eines Getriebeturbofan-Gasturbinentriebwerks (510) zu schmieren, wobei das Verfahren Folgendes umfasst:
Bereitstellen eines Einlasses (543) in einem Triebwerksgehäuse (526) und eines Auslasses (544) in dem Triebwerksgehäuse und Verbinden des Einlasses und des Auslasses mit einem Kanal (542), der in dem Triebwerksgehäuse angeordnet ist;
Installieren eines Luft-Öl-Wärmetauschers (541) in dem Kanal; und
Verbinden des Luft-Öl-Wärmetauschers mit einem Öl- oder Schmiermittelkreislauf, der durch den Getriebekasten fließt;
wobei der Auslass (544) in Kommunikation mit einer Haubenentlüftung (550) steht, die hinter der Lüfterdüse (528) angeordnet ist; und
wobei der Einlass eine Kelle zwischen dem Triebwerksgehäuse und der Gondel bildet und der Auslass innerhalb des Triebwerksgehäuses angeordnet ist.

## Revendications

1. Moteur à turbine à gaz (510) comprenant :
une nacelle (527) qui renferme un ensemble soufflante (511) et au moins une partie d'un carter de moteur (526), la nacelle et le carter de moteur définissant un chemin d'écoulement de dérivation annulaire (533) pour un écoulement d'air qui traverse la soufflante mais qui contourne un noyau de moteur disposé à l'intérieur du carter de moteur ;
la nacelle comportant une extrémité avant et une extrémité arrière qui définit une buse de soufflante (528) avec le carter de moteur ;
le carter de moteur comportant une entrée (543) reliée à un conduit (542) qui s'étend vers une sortie (544), le conduit recevant un échangeur de chaleur (541) entre l'entrée et la sortie du conduit ; et
l'échangeur de chaleur transfère la chaleur de l'huile ou du lubrifiant à l'air traversant le conduit (542) ;
dans lequel la sortie (544) est en communication avec un évent de capot (550) disposé à l'arrière de la buse de soufflante (528) ; et
dans lequel l'entrée forme une écope entre le carter de moteur et la nacelle et la sortie est disposée à l'intérieur du carter de moteur.

2. Moteur à turbine à gaz (510) selon la revendication 1, dans lequel l'entrée (543) est disposée entre le carter de moteur (526) et la nacelle (527).

3. Moteur à turbine à gaz (510) selon l'une quelconque des revendications précédentes, dans lequel le moteur à turbine à gaz est un moteur à turbosoufflante à engrenage ayant un rapport de dérivation d'au moins 6.

4. Procédé de refroidissement d'un lubrifiant ou d'une huile utilisé pour lubrifier une boîte de vitesses (516) d'un moteur à turbine à gaz à turbosoufflante à engrenage (510), le procédé comprenant :
la fourniture d'une entrée (543) dans un carter de moteur (526), et d'une sortie (544) dans le carter de moteur et la liaison de l'entrée et de la sortie avec un conduit (542) disposé dans le carter de moteur ;
l'installation d'un échangeur de chaleur air-huile (541) dans le conduit ; et
la liaison de l'échangeur de chaleur air-huile à un circuit d'huile ou de lubrifiant qui traverse la boîte de vitesses ;
dans lequel la sortie (544) est en communication avec un évent de capot (550) disposé à l'arrière de la buse de soufflante (528) ; et
dans lequel l'entrée forme une écope entre le carter de moteur et la nacelle et la sortie est disposée à l'intérieur du carter de moteur.
